(19) Europäisches Patentamt / European Patent Office / Office européen des brevets

(11) **EP 1 958 220 B1**

(12) **FASCICULE DE BREVET EUROPEEN**

(45) Date de publication et mention
de la délivrance du brevet:
**08.08.2012 Bulletin 2012/32**

(51) Int Cl.:
**H01M 4/64** *(2006.01)* **H01M 6/40** *(2006.01)*
**H01M 4/04** *(2006.01)* **H01M 4/66** *(2006.01)*
**H01M 10/0525** *(2010.01)* **H01M 4/133** *(2010.01)*

(21) Numéro de dépôt: **06793566.8**

(22) Date de dépôt: **15.09.2006**

(86) Numéro de dépôt international:
**PCT/EP2006/066420**

(87) Numéro de publication internationale:
**WO 2007/031577 (22.03.2007 Gazette 2007/12)**

(54) **DISPOSITIF DE STOCKAGE D'ENERGIE ELECTRIQUE COMPRENANT UNE COUCHE BARRIERE DE PROTECTION DU COLLECTEUR**

EINRICHTUNG ZUM SPEICHERN ELEKTRISCHER ENERGIE MIT EINER SCHUTZBARRIERENSCHICHT FÜR DEN KOLLEKTOR

DEVICE FOR STORING ELECTRIC POWER COMPRISING A PROTECTIVE BARRIER LAYER FOR THE COLLECTOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.09.2005 FR 0509421**

(43) Date de publication de la demande:
**20.08.2008 Bulletin 2008/34**

(73) Titulaire: **Batscap**
**29500 Ergué-Gabéric (FR)**

(72) Inventeur: **DEPOND, Jean-Michel**
**F-29000 QUIMPER (FR)**

(74) Mandataire: **Texier, Christian et al**
**Cabinet Regimbeau**
**20, rue de Chazelles**
**75847 Paris Cedex 17 (FR)**

(56) Documents cités:
**WO-A-03/094183      US-A- 5 464 706**
**US-A1- 2004 264 110      US-B1- 6 565 701**

• **TOMASINI L: "LES TRAITEMENTS DE SURFACE SOUS VIDE VACUUM COATING TREATMENTS" CAHIERS D'INFORMATIONS TECHNIQUES DE LA REVUE DE METALLURGIE, REVUE DE METALLURGIE. PARIS, FR, vol. 98, no. 4, avril 2001 (2001-04), pages 411-419, XP001073258 ISSN: 0035-1563**

**Description**

L'invention concerne le domaine des dispositifs électrochimiques de stockage d'énergie électrique.

Elle concerne notamment les batteries et les supercondensateurs.

Ces dispositifs sont formés par l'assemblage d'une pluralité de couches électrochimiques.

Ces dispositifs comprennent généralement un ensemble unitaire multicouche comprenant des couches d'électrodes (cathode et anode) et des couches de séparation interposées entre les électrodes. Le dispositif peut également comprendre une ou des couche(s) de collecteur, chaque couche de collecteur étant en contact avec certaines couches d'électrode.

Dans le cas d'un dispositif à électrolyte liquide, la couche de séparation (séparateur) est formée d'un matériau poreux et les différentes couches sont imprégnées d'une solution d'électrolyte liquide.

Dans le cas d'un dispositif à électrolyte solide, la couche de séparation est constituée d'une couche d'électrolyte solide.

La couche de séparation a pour fonction de maintenir les couches d'électrode à distance l'une de l'autre de manière à éviter un court-circuit du dispositif électrochimique tout en permettant l'établissement d'un courant ionique entre les couches d'électrodes, à travers l'électrolyte.

Chaque couche de collecteur a pour fonction de collecter et de conduire le courant issu d'une électrode qui lui est associée.

Dans un dispositif de stockage de type batterie lithium-polymère par exemple, la ou les couche(s) de cathode est (sont) formée(s) d'une composition comprenant un mélange de polymères et de charges actives. Le mélange de polymère contient typiquement un polymère fluoré, tel que du polyfluorure de vinylidène (PVDF) ou du polytétrafluoroéthylène (PTFE). Les charges actives sont par exemple constituées de charbons actifs ou de composés d'intercalation du lithium.

Le dispositif comprend une ou des couche(s) de collecteur associée(s) à une ou plusieurs couche(s) de cathode. La ou les couche(s) de collecteur est (sont) formée(s) en métal, tel que l'aluminium ou le cuivre.

Dans un dispositif de stockage de type supercondensateur, la ou les couche(s) d'électrode est (sont) formée(s) d'une composition comprenant un mélange de polymères et de charges actives. Le mélange de polymère contient typiquement un polymère fluoré, tel que du polyfluorure de vinylidène (PVDF) ou du polytétrafluoroéthylène (PTFE). Les charges actives sont par exemple constituées de charbons actifs.

Le dispositif comprend une ou des couche(s) de collecteur associée(s) à une ou plusieurs couche(s) d'électrode. La ou les couche(s) de collecteur est (sont) formée(s) en métal, tel que l'aluminium ou le cuivre.

La ou les couche(s) de collecteur en métal a (ont) naturellement tendance à former à leur surface une pellicule superficielle d'oxyde. Ainsi une couche de collecteur en aluminium forme une pellicule d'alumine ($Al_2O_3$) en surface.

Lors de l'assemblage mécanique d'une couche de collecteur sur une couche de cathode, la pellicule d'oxyde se trouvant à l'interface entre la couche de collecteur et la couche de cathode est brisée.

Au cours du fonctionnement du dispositif électrochimique, les ions de l'électrolyte diffusent à travers la cathode jusqu'au collecteur. Les ions de l'électrolyte réagissent avec le métal du collecteur pour former une couche de passivation. Ainsi, la pellicule d'oxyde est progressivement remplacée ou complétée par la couche de passivation issue de réactions entre des ions contenus dans l'électrolyte et le métal du collecteur.

Dans le cas d'un collecteur en aluminium, en présence d'ions fluorure (F), la couche de passivation contient typiquement du fluorure d'aluminium ($AlF_3$) ou de l'hydroxyde d'aluminium ($Al(OH)_3$).

En présence d'ions lithium ($Li^+$), on observe la formation d'une couche d'oxyde de lithium ($Li_2O$) ou d'hydroxyde de lithium (LiOH) en remplacement de la pellicule d'oxyde initiale.

Une fois formée, la couche de passivation constitue une couche barrière qui empêche la diffusion de certains ions de l'électrolyte jusqu'à la couche de collecteur et protège ainsi le collecteur.

Cependant, la formation de la couche de passivation entraîne une consommation des ions contenus dans l'électrolyte et une attaque de la couche de collecteur.

En outre, dans le cas d'une électrode chargée, en cas de rupture locale de la couche de passivation (par exemple à cause d'un choc, d'une rayure ou d'une dissolution chimique), la présence de charges graphitiques au sein de l'électrode induit des réactions électrochimiques qui dissolvent le métal à nu de la couche de collecteur. Ces réactions peuvent en outre produire des gaz potentiellement dangereux (notamment du dihydrogene) par effet de pile électrochimique.

Enfin, dans le cas d'une couche de collecteur en aluminium et d'une couche d'électrode polymérique, la présence d'alumine à la surface de la couche de collecteur entraîne une mauvaise adhérence de la couche d'électrode sur la couche de collecteur.

L'ensemble de ces phénomènes peut entraîner une consommation complète de la couche de collecteur au cours de la vie du dispositif de stockage d'énergie et dégrader fortement les caractéristiques en fonctionnement du dispositif.

Le document US 4 464 706 décrit une batterie lithium-ion, dans laquelle une couche électriquement conductrice en nitrure de titane ou de zirconium est insérée entre un collecteur de courant et la face de l'électrode en contact avec le collecteur de courant, afin de constituer une protection contre la corrosion.

Les documents US 2004/0264110, US 6,565,701 et WO 03/094183 décrivent également des structures dans lesquelles une couche intermédiaire est agencée entre un collecteur et une électrode.

Un but de l'invention est de préserver la couche de collecteur au cours de la durée de vie du dispositif électrochimique de stockage d'énergie.

Ce problème est résolu dans le cadre de la présente invention grâce à un dispositif de stockage d'énergie conforme à la revendication 1. La stoechiométrie $x$ est définie comme le rapport du nombre d'atomes d'azote ($N$) sur le nombre d'atomes métalliques ($Me$) contenus dans la couche barrière.

La couche barrière protège le collecteur contre les espèces réactives présentes dans l'électrolyte.

En outre, la couche barrière joue un rôle d'inhibiteur des réactions électrochimiques induites par la présence de charges graphitiques dans la couche d'électrode.

La couche barrière peut avantageusement présenter les caractéristiques suivantes:

- la couche barrière est formée en nitrure de titane ($T_iN$), en nitrure de chrome ($CrN$) ou en nitrure de titane-aluminium ($TiAln$),
- la couche barrière présente une structure colonnaire.
- la couche barrière est formée par pulvérisation magnétron réactive ou par évaporation réactive par canon à électrons activée par plasma,
- la couche barrière présente une structure granulaire,
- la couche barrière est formée par évaporation réactive par arcs ou par évaporation réactive par canon à électrons sans activation plasma.

L'invention se rapporte également à un procédé d'assemblage d'un dispositif de stockage d'énergie conforme à la revendication 7.

Le procédé d'assemblage peut avantageusement comprendre une étape préalable consistant à sélectionner des paramètres :de taille de grain d'épaisseur et de stoechiométrie de la couche barrière en fonction d'une durée de vie recherchée du dispositifs de stockage d'énergie.

Par ailleurs, le procédé peut avantageusement présenter les caractéristiques suivantes:

- le procédé comprend une étape consistant à former la :couche barrière par dépôt sur une surface de la couche de collecteur,
- le procédé comprend une étape consistant à former la couche barrière par dépôt sur une surface de la couche d'électrode,
- le procédé comprend une .étape préliminaire consistant à décaper une surface de la couche de collecteur destinée à être en contact avec la couche barrière,
- le procédé comprend une étape consistant à former la couche barrière par pulvérisation magnétron réactive, par évaporation réactive par canon à électrons activée par plasma, par évaporation réactive par arcs ou par évaporation réactive par canon à électrons sans activation plasma ou encore par tout autre procédé permettant d'obtenir une couche barrière présentant les paramètres sélectionnés.

D'autres caractéristiques et avantages ressortiront encore de la description qui suit, laquelle est purement illustrative et non limitative et doit être lue en regard des figures annexées parmi lesquelles :

- la figure 1 représente de manière schématique un ensemble unitaire multicouche dans un dispositif électrochimique de stockage d'énergie électrique conforme à un premier mode de réalisation de l'invention,
- la figure 2 représente de manière schématique un ensemble unitaire multicouche dans un dispositif électrochimique de stockage d'énergie électrique conforme à un deuxième mode de réalisation de l'invention,

- les figures 3 et 4 représentent de manière schématique des structures de couches barrière,
- la figure 5 représente de manière schématique un profil de surface de la couche de collecteur,
- les figures 6 à 14 sont des diagrammes représentant les paramètres d'une couche de collecteur (stoechiométrie, densité, épaisseur) pour différentes durées de vie du dispositif électrochimique de stockage d'énergie à électrolyte liquide,
- la figure 15 est un diagramme représentant les paramètres d'une couche de collecteur (stoechiométrie, densité, épaisseur) pour différentes durées de vie du dispositif électrochimique de stockage d'énergie à électrolyte solide,
- la figure 16 représente de manière schématique des étapes d'un procédé d'assemblage d'un dispositif électrochimique conforme à un mode de mise en oeuvre de l'invention,

- la figure 17 est un diagramme représentant de manière schématique des techniques de dépôt de la couche barrière en fonction de paramètre de stoechiométrie et de taille de grains de la couche barrière,
- la figure 18 est un diagramme représentant de manière schématique une structure de couche de collecteur en fonction des conditions de dépôt.

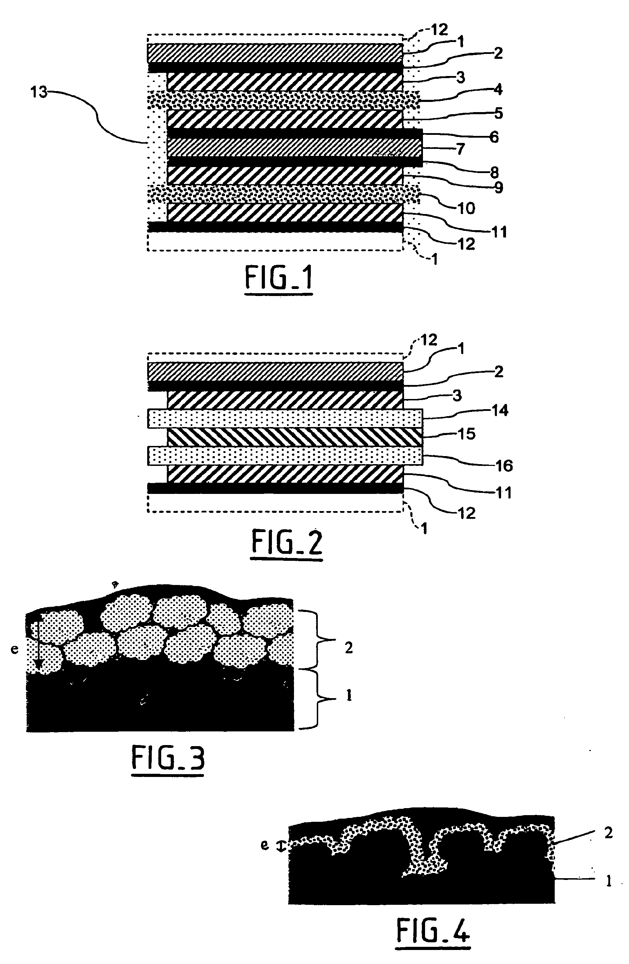

Selon un premier mode de réalisation, un dispositif électrochimique de stockage d'énergie est formé par superposition d'une pluralité d'ensembles unitaires multicouches conformes à celui qui est représenté sur la figure 1. Ce premier mode de réalisation correspond typiquement à une structure de supercondensateur.

Le dispositif peut être obtenu par enroulement de l'ensemble unitaire multicouche ou par empilement d'une pluralité d'ensembles unitaires multicouches. L'assemblage présente ainsi un motif répétitif défini par l'ensemble unitaire représenté sur la figure 1.

L'ensemble unitaire multicouche comprend une première couche de collecteur 1, une première couche barrière 2, une première couche d'électrode. 3, une première couche de séparation 4, une deuxième couche d'électrode 5, une deuxième couche barrière 6, une deuxième couche de collecteur 7, une troisième couche barrière 8, une troisième couche d'électrode 9, une deuxième couche de séparation 10, une quatrième couche d'électrode 11 et une quatrième couche barrière 12. Le dispositif électrochimique comprend également un électrolyte liquide 13.

La première couche de collecteur 1 est associée à la première couche d'électrode 3 et à une quatrième couche d'électrode 11 d'un ensemble unitaire adjacent. Autrement dit, la première couche de collecteur 1 est en contact électrique avec la première couche d'électrode 3 et la quatrième couche d'électrode 11 de l'ensemble adjacent afin de collecter le courant issu de la première couche d'électrode 3 et de la quatrième couche d'électrode 11 de l'ensemble adjacent.

La première couche barrière 2 est interposée entre la première couche de collecteur 1 et la première couche d'électrode 3. La première couche barrière 2 est électriquement conductrice (i.e. la couche barrière 2 est apte à conduire les électrons), de sorte que la première couche de collecteur 1 et la première couche d'électrode 3 sont en contact électrique par l'intermédiaire de la couche barrière 2.

La première couche de séparation 4 est une couche poreuse qui s'étend entre les deux couches d'électrode 3 et 5. La couche de séparation 4 et les couches d'électrodes 3 et 5 sont imprégnées de l'électrolyte liquide 13. La couche de séparation permet de maintenir la première couche d'électrode 3 et la deuxième couche d'électrode 5 à distance l'une de l'autre tout en permettant une circulation des ions de l'électrolyte 13 entre les deux électrodes.

La deuxième couche de collecteur 7 est associée d'une part à la deuxième couche d'électrode 5 et d'autre part à la troisième couche d'électrode. Autrement dit, la deuxième couche de collecteur 7 est en contact électrique avec les deuxième et troisième couches d'électrode 5 et 9 afin de collecter le courant issu des deuxième et troisième couches d'électrode 5 et 9.

La deuxième couche barrière 6 est interposée entre la deuxième couche de collecteur 7 et la deuxième couche d'électrode 5. La deuxième couche barrière 6 est électriquement conductrice, de sorte que la deuxième couche de collecteur 7 et la deuxième couche d'électrode 5 sont en contact électrique par l'intermédiaire de la couche barrière 6.

La troisième couche barrière 8 est interposée entre la deuxième couche de collecteur 7 et la troisième couche d'électrode 9. La troisième couche barrière 8 est électriquement conductrice, de sorte que la deuxième couche de collecteur 7 et la troisième couche d'électrode 9 sont en contact électrique par l'intermédiaire de la couche barrière 8.

La deuxième couche de séparation 10 s'étend entre les deux couches d'électrode 9 et 11. La couche de séparation 10 et les couches d'électrodes 9 et 11 sont imprégnées de l'électrolyte liquide 13. La couche de séparation permet de maintenir la troisième couche d'électrode 9 et la quatrième couche d'électrode 11 à distance l'une de l'autre tout en permettant une circulation des ions de l'électrolyte 13 entre les deux électrodes.

La quatrième couche barrière 12 est interposée entre la quatrième couche d'électrode 11 et une première couche de collecteur 1 d'un ensemble unitaire adjacent (représentée en traits pointillés). La quatrième couche barrière 12 est électriquement conductrice, de sorte que la quatrième couche d'électrode 11 et la première couche de collecteur 1 sont en contact électrique par l'intermédiaire de la couche barrière 12.

Les couches d'électrode 3, 5, 9 et 11 sont formées d'une composition comprenant un mélange de polymères et de charges actives.

Les couches de collecteur 1 et 7 sont formées en aluminium.

L'électrolyte liquide 13 est un électrolyte présentant une viscosité de l'ordre de 0,5 à 1,5 centistoke ($10^{-6}$ mètre carré par seconde) à 25 degrés Celsius. L'électrolyte liquide 13 comprend une composition formée par exemple d'acétonitrile, de γ-butyrolactone, de carbonate de propylène ou d'un mélange de ces composés, ou encore d'eau, et d'un sel conducteur, tel que par exemple du tétra-éthyl-ammonium-tétra-fluoroborate $((CH_2H_5)_4NBF_4)$.

Les couches barrières 2, 6, 8 et 12 sont formées en nitrure de titane (*TiNx*). Chaque couche barrière 2, 6, 8, 12 présente une stoechiométrie x ≥ 0,97 et une structure morphologique dense, c'est-à-dire sans porosité intrinsèque. La stoechiométrie des couches barrière 2, 6, 8, 12 permet de garantir une neutralité de chaque couche barrière 2, 6, 8, 12 vis à vis des espèces réactives agressives (telles que par exemple $BF_4^-$ , $F^-$ , $OH^-$ , $H^+$, $H_2O$ , $HCN$) naturellement présentes aux interfaces entre les couches de collecteur 1 ou 7 et les couches d'électrode 3, 5, 9 et 11 associée.

Selon un deuxième mode de réalisation, un dispositif électrochimique de stockage d'énergie est formée par superposition d'une pluralité d'ensembles unitaires multicouche conformes à celui qui est représenté sur la figure 2. Ce deuxième mode de réalisation correspond typiquement à une structure de batterie lithium-polymère.

Le dispositif peut être obtenu par enroulement de l'ensemble unitaire multicouche ou par empilement d'une pluralité d'ensembles unitaires multicouches. L'assemblage présente ainsi un motif répétitif défini par l'ensemble unitaire représenté sur la figure 2.

L'ensemble unitaire multicouche comprend un empilement d'une pluralité de couches. L'empilement comprend une couche de collecteur 1, une première couche barrière 2, une première couche d'électrode 3 (cathode), une première couche d'électrolyte solide 14, une deuxième couche d'électrode 15 (anode), une deuxième couche d'électrolyte solide 16, une troisième couche d'électrode 11 (cathode), une deuxième couche barrière 12 et une deuxième couche barrière 12.

Chacune des couches de cathode 3 et 11 est associée à une couche de collecteur.

La première couche d'électrode 3 est associée à la couche de collecteur 1 et la troisième couche d'électrode 11 est associée à une couche de collecteur 1 d'un ensemble unitaire adjacent (représentée en traits pointillés).

La première couche barrière 2 est interposée entre la première couche de collecteur 1 et la première couche d'électrode 3. La première couche barrière 2 est électriquement conductrice (i.e. la couche barrière 2 est apte à conduire les électrons), de sorte que la première couche de collecteur 1 et la première couche d'électrode 3 sont en contact électrique par l'intermédiaire de la couche barrière 2.

La deuxième couche barrière 12 est interposée entre la deuxième couche d'électrode 11 et la couche de collecteur 1 de l'ensemble unitaire adjacent. La deuxième couche barrière 12 est électriquement conductrice, de sorte que la deuxième couche d'électrode 11 et la couche de collecteur 1 sont en contact électrique par l'intermédiaire de la couche barrière 12.

On remarque que la couche d'anode 15 n'est pas associée à une couche de collecteur. La couché d'anode 15 assure elle-même une fonction de collecte du courant.

Les couches d'électrolyte 14 et 16 sont formées d'un électrolyte solide présentant une viscosité de l'ordre de 3 à 4 centistoke ($10^{-6}$ mètre carré par seconde) à 25 degrés Celsius. L'électrolyte solide comprend une composition formée par exemple de polyoxyéthylène (POE) ou de polyéthylène glycol (PEG), et d'un sel conducteur tel que du lithium bis-(trifluoro-méthyl-sulfonil)-imide (LiTFSi).

Les figures 3 et 4 représentent de manière schématique des structures de couches de protection déposées sur un substrat.

Sur ces figures, une couche de protection 2 a été déposée sur surface d'une couche de substrat 1.

Comme on peut le constater sur la figure 3, la couche 2 est formée de grains présentant des dimensions moyennes sensiblement identiques ou supérieures aux dimensions des grains formant la couche de substrat 1.

Sur la figure 4, une couche 2 est formée de grains présentant des dimensions moyennes très inférieures aux dimensions des grains formant la couche de substrat 1.

Le recouvrement total et continu de la surface de substrat impose que la taille moyenne de grains de la couche de protection soit inférieure à la rugosité de la surface de la couche de substrat.

En effet, si la taille des grains de la couche 2 est de l'ordre de la rugosité de la couche de substrat 1 (figure 3), une grande part de la surface du substrat ne sera pas recouverte par la couche 2. De plus, la couche 2 sera mécaniquement fragile et plus facilement poreuse. En milieu électrolyte liquide (typiquement dans le cas d'un supercondensateur), les interstices entre les grains seront remplies d'électrolyte. Dans tous les cas, la couche de protection 2 ne remplira pas une fonction de barrière vis à vis de la couche de substrat.

En revanche, si la taille des grains de la couche 2 est très inférieure à la rugosité de la couche de substrat (figure 4), la surface de la couche de substrat sera entièrement tapissée par la couche de protection 2. La couche de protection 2 sera solidaire mécaniquement de la couche de collecteur 1, naturellement dense, et pourra remplir une fonction de barrière.

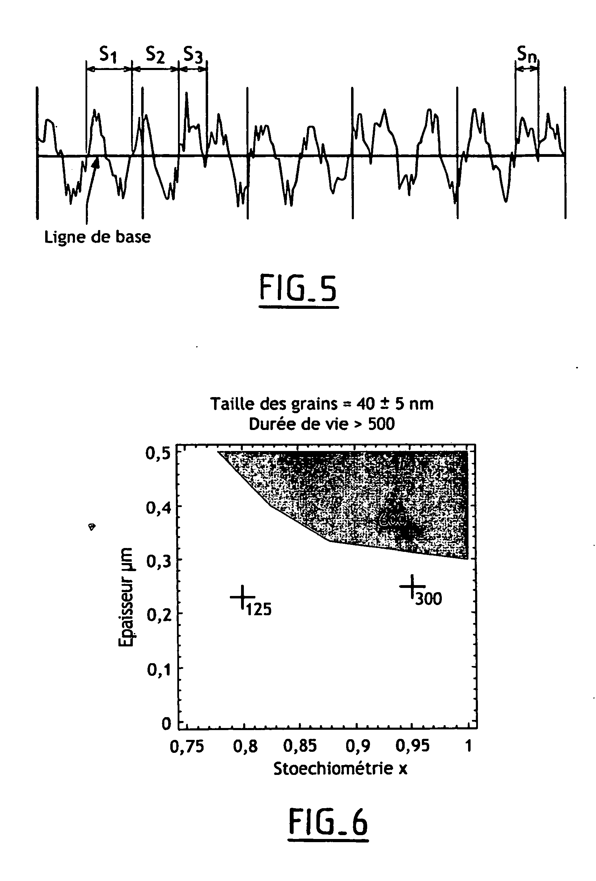

La figure 5 représente un profil de surface de la couche de substrat

La ligne de profil est formée d'une succession de pics et de creux.

La ligne de base est la droite moyenne de la ligne de profil.

L'écart arithmétique moyen $R_a$ est la moyenne arithmétique des valeurs absolues des écarts entre les sommets des pics ou des creux et la ligne de base.

L'écart type $R_q$ est la moyenne quadratique des écarts entre les sommets des pics ou des creux et la ligne de base.

En dehors des caractéristiques de rugosité classiques $R_a$ et $R_q$ qui informent sur la composante verticale de la rugosité d'une surface, on définit deux grandeurs caractéristiques de la composante horizontale de la rugosité d'une surface :

La distance moyenne entre deux franchissements à la montée consécutifs de la ligne de base, notée $S_m$, est définie à partir d'un profil de rugosité.

$$S_m = \frac{1}{N} \sum_{i=1}^{N} S_i$$

$S_m$, traduit la largeur moyenne des creux de la surface ou encore une taille moyenne de grains.

La pente quadratique moyenne, notée $\Delta_q$, est la moyenne quadratique de la pente du profil de rugosité.

La longueur d'onde quadratique moyenne, notée $\lambda q$, est définie à partir des grandeurs rugosité quadratique moyenne $R_q$ et pente quadratique moyenne $\Delta_q$.

$$\lambda_q = 2\pi \frac{R_q}{\Delta_q}$$

$\lambda_q$ traduit la périodicité de la rugosité de surface.

Ainsi, comme illustré sur la figure 4, la couche barrière 2 présente de préférence une taille moyenne de grains de l'ordre de 40 fois inférieure à $S_m$ ou $\lambda_q$, paramètres caractérisant la composante horizontale de la rugosité de la surface de la couche substrat.

Cette condition étant remplie, la couche barrière peut être déposée sur toute morphologie de substrat (lisse, rugueux, strié, gravé par attaque chimique ou par bombardement électronique ou ionique, granulaire, etc.).

EXEMPLES 1 A 12

On réalise une pluralité de supercondensateurs à électrolyte liquide (viscosité ≤ 2 centistoke à 25 degrés Celsius).

Chaque supercondensateur comprend une couche barrière formée en nitrure de titane ($T_iN_x$). La couche barrière présente une taille moyenne de grains, une épaisseur et une stoechiométrie donnée.

Une stoechiométrie $x$ est définie comme le rapport du nombre d'atomes d'azote ($N$) sur le nombre d'atomes de titane ($Ti$) contenus dans la couche barrière.

On mesure une durée de vie du supercondensateur obtenu.

Pour un supercondensateur, une durée de vie $n$ correspond à une alimentation pendant $n$ heures à 70 degrés Celsius sous une tension comprise entre 2,3 et 2,8 Volt.

On considère que le supercondensateur a atteint sa fin de vie lorsque le supercondensateur a perdu 20% de sa capacité initiale.

On obtient les résultats présentés dans le tableau 1, parmi lesquels les exemples 1 à 5 et 8 à 10 ne font pas partie de l'invention.

Tableau 1 - Durée de vie d'un supercondensateur à électrolyte liquide en fonction de paramètres de la couche barrière (taille de grains, épaisseur, stoechiométrie)

|  | Taille de grain (nm) | Epaisseur (µm) | Stoechiométrie $x$ | Durée de vie $n$ |
|---|---|---|---|---|
| Exemple 1 | 40 ± 5 | 0,23 | 0,80 | 125 |
| Exemple 2 | 40 ± 5 | 0,25 | 0,95 | 300 |
| Exemple 3 | 40 ± 5 | 0,35 | 0,95 | 600 |
| Exemple 4 | 30±5 | 0,21 | 0,77 | 200 |
| Exemple 5 | 30 ±5 | 0,08 | 0,95 | 300 |
| Exemple 6 | 30±5 | 0,20 | 0,99 | 1000 |
| Exemple 7 | 30±5 | 0,30 | 0,85 | 1000 |
| Exemple 8 | 30±5 | 0,39 | 0,96 | 3000 |
| Exemple 9 | 20±5 | 0,08 | 0,97 | 600 |

(suite)

|  | Taille de grain (nm) | Epaisseur (μm) | Stoechiométrie x | Durée de vie n |
|---|---|---|---|---|
| Exemple 10 | 20±5 | 0,16 | 0,83 | 900 |
| Exemple 11 | 20±5 | 0,15 | 0,95 | 1200 |
| Exemple 12 | 20±5 | 0,23 | 0,99 | 2100 |

Les figures 6 à 14 sont des diagrammes représentant les paramètres d'une couche barrière (stoechiométrie, densité, épaisseur) pour différentes durées de vie de supercondensateurs.

Les diagrammes des figures 6 à 8 ont été établis pour une taille de grain de 40 ± 5 nanomètres. Les exemples 1, 2 et 3 ont été représentés sur ces diagrammes.

Sur le diagramme de la figure 6, la zone grisée correspond à une durée de vie supérieure à 500.

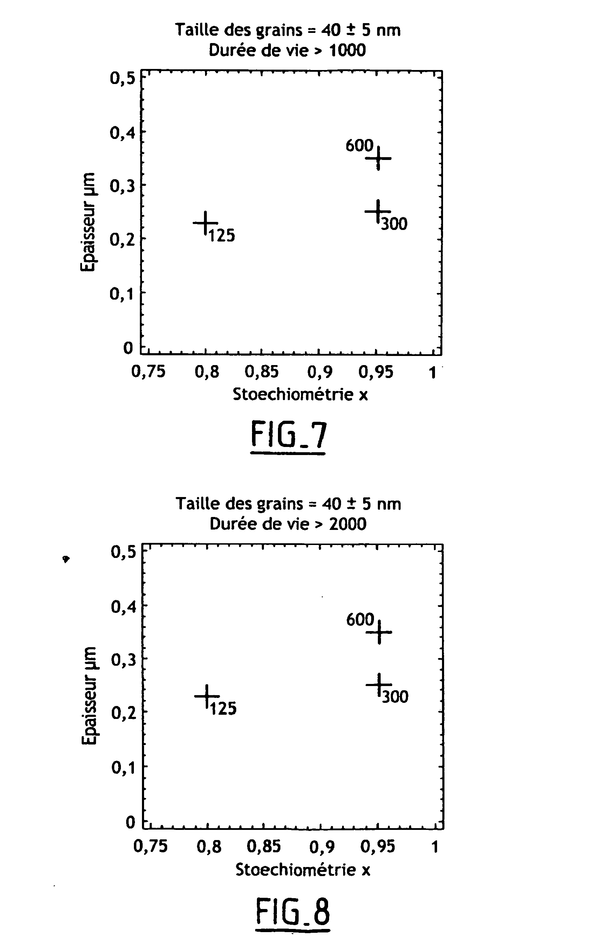

Sur le diagramme de la figure 7, la zone grisée correspond à une durée de vie supérieure à 1000.

Sur le diagramme de la figure 8, la zone grisée correspond à une durée de vie supérieure à 2000.

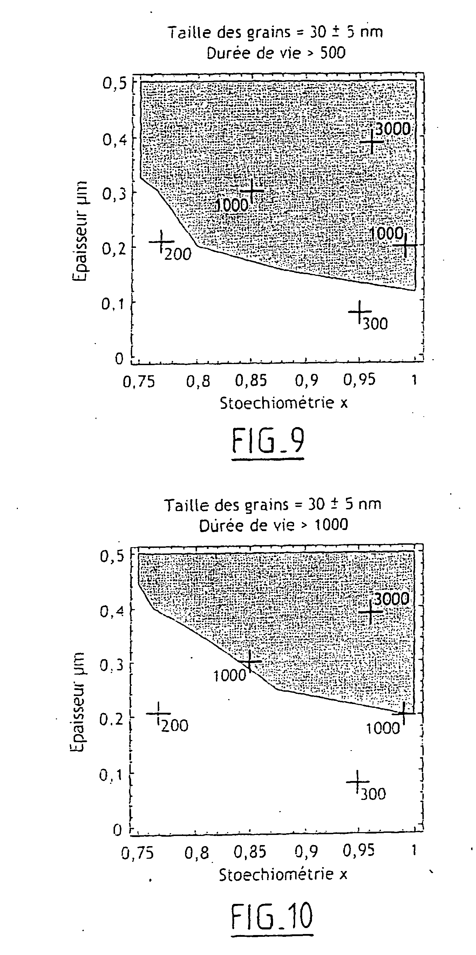

Les figures 9 à 11 ont été établies pour une taille de grains de 30 ± 5 nanomètres. Les exemples 3, 4, 5, 6, 7 et 8 ont été représentés sur ces diagrammes.

Sur le diagramme de la figure 9, la zone grisée correspond à une durée de vie supérieure à 500.

Sur le diagramme de la figure 10, la zone grisée correspond à une durée de vie supérieure à 1000.

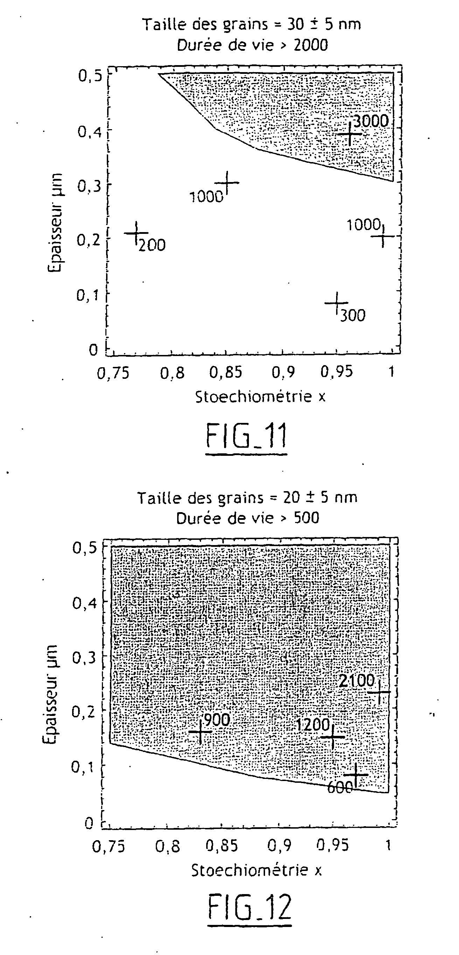

Sur le diagramme de la figure 11, la zone grisée correspond à une durée de vie supérieure à 2000.

Les figures 12 à 14 ont été établies pour une taille de grains de 20 ± 5 nanomètres. Les exemples 9, 10, 11 et 12 ont été représentés sur ces diagrammes.

Sur le diagramme de la figure 12, la zone grisée correspond à une durée de vie supérieure à 500.

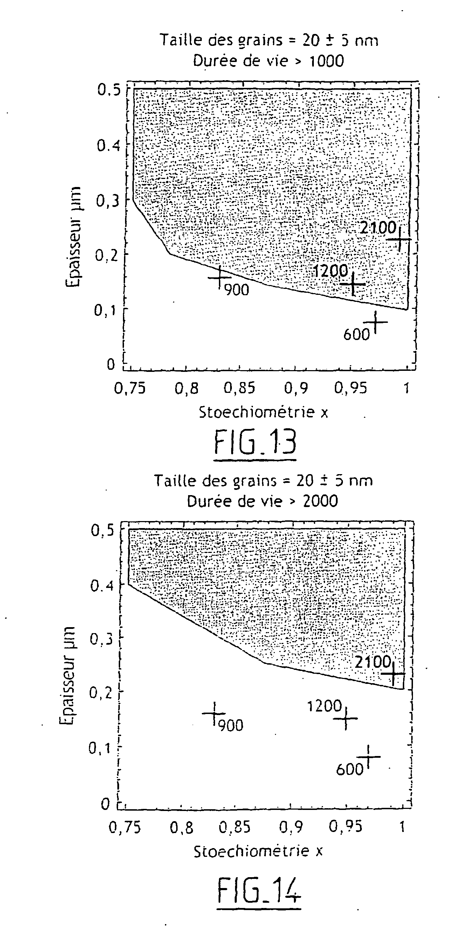

Sur le diagramme de la figure 13, la zone grisée correspond à une durée de vie supérieure à 1000.

Sur le diagramme de la figure 14, la zone grisée correspond à une durée de vie supérieure à 2000.

EXEMPLES 13 A 24

On réalise une pluralité de batteries lithium-polymère à électrolyte solide (viscosité > 2 centistoke à 25 degrés Celsius).

Chaque batterie comprend une couche barrière formée en nitrure de titane $(T_iN_x)$. La couche barrière présente une taille moyenne de grains, une épaisseur et une stoechiométrie donnée.

Une stoechiométrie x est définie comme le rapport du nombre d'atomes d'azote (N) sur le nombre d'atomes de titane ($T_i$) contenus dans la couche barrière.

On mesure une durée de vie de la batterie obtenue.

Pour une batterie, une durée de vie n correspond à n cycles de charge et décharge entre 2 Volt et 3,3 Volt à 90 degrés Celsius (température de fonctionnement de la batterie), la phase de charge ayant une durée de 4 heures et la phase de décharge ayant une durée de 2 heures.

On considère que la batterie a atteint sa fin de vie lorsque la batterie a perdu 20% de sa capacité initiale.

On obtient les résultats présentés dans le tableau 2, parmi lesquels les exemples 13 à 17 et 20 à 22 ne font pas partie de l'invention.

Tableau 2 - Durée de vie d'une batterie à électrolyte solide en fonction de paramètres de la couche barrière (taille de grains, épaisseur, stoechiométrie)

|  | Taille de grain (nm) | Epaisseur (μm) | Stoechiométrie x | Durée de vie n |
|---|---|---|---|---|
| Exemple 13 | 40±5 | 0,23 | 0,80 | 1100 |
| Exemple 14 | 40±5 | 0,25 | 0,95 | 1200 |
| Exemple 15 | 40±5 | 0,35 | 0,95 | 1350 |
| Exemple 16 | 30±5 | 0,21 | 0,77 | 950 |
| Exemple 17 | 30±5 | 0,08 | 0,95 | 400 |
| Exemple 18 | 30±5 | 0,20 | 0,99 | 1200 |
| Exemple 19 | 30±5 | 0,30 | 0,85 | 1100 |
| Exemple 20 | 30±5 | 0,39 | 0,96 | 1300 |

(suite)

|  | Taille de grain (nm) | Epaisseur ($\mu$m) | Stoechiométrie $x$ | Durée de vie $n$ |
|---|---|---|---|---|
| Exemple 21 | 20$\pm$5 | 0,08 | 0,97 | 550 |
| Exemple 22 | 20$\pm$5 | 0,16 | 0,83 | 1050 |
| Exemple 23 | 20$\pm$5 | 0,15 | 0,95 | 1100 |
| Exemple 24 | 20$\pm$5 | 0,23 | 0,99 | 1200 |

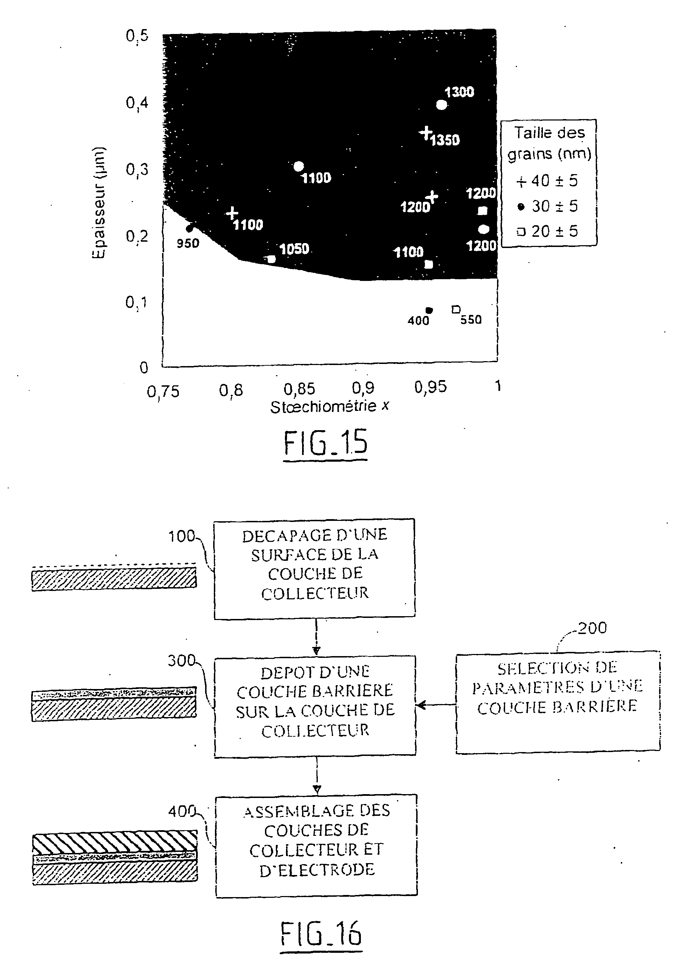

La figure 15 est un diagramme représentant les paramètres d'une couche barrière (stoechiométrie, densité, épaisseur) pour différentes durées de vie de batterie. Ce diagramme a été établi pour des tailles de grains de 20 $\pm$ 5 nanomètres, 30 $\pm$ 5 nanomètres et 40 $\pm$ 5 nanomètres. Les exemples 13 à 24 ont été représentés sur ce diagramme.

Sur ce diagramme, la zone représentée en noir correspond à une durée de vie supérieure ou égale à 1000.

On notera que, dans le cas d'un dispositif de stockage d'énergie à électrolyte solide, la taille moyenne des grains de la couche barrière a peu d'influence sur la durée de vie du dispositif de stockage d'énergie.

La figure 16 représente de manière schématique des étapes d'un procédé d'assemblage d'un dispositif électrochimique conforme à un mode de mise en oeuvre de l'invention.

Selon une première étape 100, on décape une surface de la couche de collecteur 1. Cette étape de décapage consiste à éliminer une pellicule superficielle d'oxydes et de dépôts de surface (graisses, hydrocarbures, etc.) présente sur la surface de la couche de collecteur 1.

Cette première étape de décapage est par exemple réalisée par une technique de traitement ou bombardement ionique par plasma. Le gaz utilisé est de l'argon (et contient éventuellement du dihydrogène $H_2$ ou de l'ammoniac $NH_3$). La pression de travail est comprise entre $10^{-1}$ et $10^{-3}$ millibar. La puissance du générateur de plasma est comorise entre 1 et 10 kilowatt et la durée du traitement est de l'ordre de 10 à 30 secondes.

Selon une deuxième étape 200, on sélectionne des paramètres (taille de grains, épaisseur, stoechiométrie) d'une couche barrière en fonction d'une durée de vie recherchée.

Lors de cette étape, on se réfère aux diagrammes des figures 6 à 14 ou au diagramme de la figure 15.

Selon une troisième étape 300, on dépose sur la surface décapée de la couche de collecteur 1 une couche barrière 2 présentant une taille de grains, une épaisseur et une stoechiométrie contrôlées.

Selon une possibilité, cette troisième étape est réalisée par une technique de dépôt par évaporation par canon à électrons assistée par plasma. Le dépôt est réalisé sous une pression de travail comprise entre $10^{-2}$ et $10^{-4}$ millibar, avec une puissance du canon à électron comprise entre 25 et 75 kiloWatt, le substrat (collecteur) étant maintenu à une température inférieure à 100 degrés Celsius, avec un flux de gaz (diazote $N_2$) compris entre 10 et $10^4$ sccm (centimètres cube standard par minute).

Selon une autre possibilité, cette troisième étape est réalisée par une technique de dépôt par évaporation par arc. Le dépôt est réalisé sous une pression de travail comprise entre $10^{-2}$ et $10^{-4}$ millibar, avec une puissance du générateur à arcs comprise entre 25 et 75 kilowatts, le substrat (collecteur) étant maintenu à une température inférieure à 100 degrés Celsius, avec un flux de gaz (diazote $N^2$) compris entre 10 et $10^4$ sccm (centimètres cube standard par minute).

Selon une autre possibilité encore, cette troisième étape est réalisée par une technique de dépôt par pulvérisation magnétron réactive. Le dépôt est réalisé sous une pression de travail comprise entre $10^{-2}$ et $10^{-4}$ millibar, avec une puissance du générateur magnétron réactive comprise entre 5 et 30 kilowatt, le substrat (collecteur) étant maintenu à une température inférieure à 100 degrés Celsius, avec un flux de gaz (diazote $N_2$) compris entre 10 et $10^4$ sccm (centimètres cube standard par minute).

Selon une quatrième étape 400, on assemble une couche d'électrode 3 et la couche de collecteur 1 associée de sorte que la couche barrière 2 s'étende entre la couche d'électrode 3 et la couche de collecteur 1.

Dans le procédé d'assemblage qui vient d'être décrit, une couche barrière est déposée sur une surface d'une couche de collecteur.

Dans le cas d'un dispositif de stockage d'énergie à électrolyte solide, la couche barrière pourrait être déposée sur une couche d'électrode.

Dans ce cas, lors de la troisième étape 300, on peut déposer sur une surface de la couche d'électrode 3 la couche barrière 2 présentant une taille de grains, une épaisseur et une stoechiométrie contrôlées.

Selon une possibilité, cette troisième étape est réalisée par une technique de dépôt par pulvérisation magnétron réactive. Le dépôt est réalisé sous une pression de travail comprise entre $10^{-2}$ et $10^{-4}$ millibar, à une puissance comprise entre 0,5 et 5 kilowatt, le substrat (électrode) étant maintenu à une température inférieure à 25 degrés Celsius, avec un flux de gaz (diazote $N_2$) compris entre 1 et $10^3$ sccm (centimètres cube standard par minute).

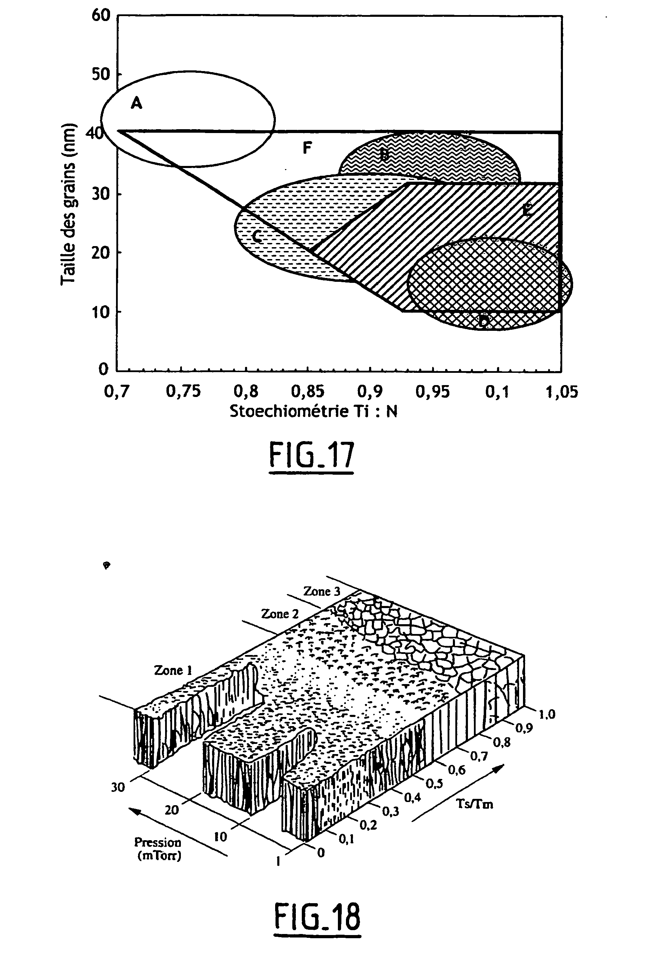

La figure 17 est un diagramme représentant de manière schématique des techniques de dépôt de la couche barrière en fonction de paramètre de stoechiométrie et de taille de grains de la couche barrière.

Les techniques de dépôt par évaporation réactive par canon à électron (domaine A) sont adaptées pour obtenir une stoechiométrie $x$ comprise entre 0,7 à 0,8 et une taille de grains comprise entre 40 et 50 nanomètres.

Les techniques de dépôt par évaporation réactives par arcs (domaine B) sont adaptées pour obtenir une stoechiométrie $x$ comprise entre 0,9 et 1 et une taille de grains comprise entre 30 et 40 nanomètres.

Les techniques de dépôt par évaporation réactive par canon à électrons assistées par plasma (domaine C) sont adaptées pour obtenir une stoechiométrie $x$ comprise entre 0,8 et 1 et une taille de grains comprise entre 20 et 30 nanomètres.

Les techniques de dépôt par pulvérisation magnétron réactive (domaine D) sont adaptées pour obtenir une stoechiométrie $x$ comprise entre 0,95 et 1,05 et une taille de grains comprise entre 10 et 20 nanomètres.

Pour une durée de vie d'un dispositif de stockage d'énergie à électrolyte liquide en application standard de type alimentation sans interruption (durée de vie de $n = 1000$), le dispositif de stockage d'énergie comprend une couche barrière dont les paramètres sont définis par le domaine E. Le domaine E correspond à une stoechiométrie comprise entre 0,85 et 1,05 et à une taille de grains comprise entre 10 et 30 nanomètres.

Pour une durée de vie d'un dispositif de stockage d'énergie à électrolyte solide en application standard de type véhicule électrique (durée de vie de $n = 1000$), le dispositif de stockage d'énergie comprend une couche barrière dont les paramètres sont définis par le domaine F. Le domaine E correspond à une stoechiométrie comprise entre 0,75 et 1,05 et à une taille de grains comprise entre 10 et 40 nanomètres.

La figure 18 est un diagramme représentant de manière schématique une structure de couche barrière en fonction des conditions de dépôt. $T_s$ désigne la température du substrat (couche de collecteur) et $T_m$ désigne la température de fusion du matériau déposé (couche barrière).

Le diagramme comprend une première zone (Zone 1) dans laquelle la structure du matériau déposé est granulaire poreuse, une deuxième zone (Zone 2) dans laquelle la structure du matériau déposé est colonnaire et une troisième zone (Zone 3) dans laquelle la structure du matériau déposé est cristalline.

La morphologie de dépôt offrant la densité la plus forte est obtenue par croissance cristalline (Zone 3). Cependant une telle croissance n'est pas possible car le substrat (le collecteur ou l'électrode) est polycristallin et rugueux.

A défaut, la morphologie de dépôt la plus apte à répondre à l'exigence de densité est obtenue par croissance colonnaire (Zone 2). Ce type de croissance est observé dans le cas de dépôt par pulvérisation magnétron réactive et dans certaines configurations de dépôt par évaporation réactive par canon à électrons activée par plasma.

Une morphologie de dépôt pouvant également répondre à l'exigence de densité est obtenue par croissance granulaire (Zone 1). Ce type de croissance est observé dans le cas de dépôt par évaporation réactive par arcs ou par évaporation réactive par canon à électrons sans activation plasma. Cependant, les couches obtenues sont naturellement poreuses et l'exigence de densité n'est atteignable que si la taille des grains est très petite (diamètre apparent inférieur à 20 nanomètres mesuré en microscopie à force atomique par exemple), ce qui suppose de travailler à des pressions très faibles (< 10 milliTorr) difficiles à atteindre puisque la réaction de nitruration nécessite la présence d'un flux de diazote ($N_2$).

Une morphologie dense de dépôt ne peut être obtenue que si les oxydes et hydroxydes en surface du substrat (alumine et hydroxyde d'aluminium par exemple pour un collecteur à base d'aluminium, oxydes de cuivre $CuO_x$ par exemple pour un collecteur à base de cuivre) sont éliminés avant le dépôt lui-même. L'étape 100 de décapage de la surface du collecteur est alors nécessaire avant la réalisation de la couche barrière à base de nitrure métallique.

**Revendications**

1. Dispositif de stockage d'énergie comprenant une couche (3, 5, 9, 11) d'électrode et une couche (1, 7) de collecteur associé à la couche d'électrode, comprenant également une couche barrière (2, 6, 8, 12) formée en nitrure métallique $MeN_x$, dans laquelle $Me$ est un métal ou plusieurs métaux, la couche barrière (2, 6, 8, 12) étant interposée entre la couche (3, 5, 9, 11) d'électrode et la couche (1, 7) de collecteur, la couche barrière (2, 6, 8, 12) étant apte à empêcher une diffusion d'ions contenus dans un électrolyte (13, 14, 16) jusqu'à la couche (1, 7) de collecteur, **caractérisé en ce que** la couche barrière (2, 6, 8, 12) présente une stoechiométrie $x$ comprise entre 0,85 et 1,05, une taille de grains comprise entre 10 et 30 nanomètres et une épaisseur comprise entre 0,15 et 0,30 micromètres.

2. Dispositif selon la revendication 1, dans lequel la couche barrière (2, 6, 8, 12) est formée en nitrure de titane (*TiN*), en nitrure de chrome (*CrN*) ou en nitrure de titane-aluminium (*TiAlN*).

3. Dispositif selon l'une des revendications 1 ou 2, dans lequel la couche barrière (2, 6, 8, 12) présente une structure colonnaire.

**4.** Dispositif selon la revendication 3, dans lequel la couche barrière (2, 6, 8, 12) est formée par pulvérisation magnétron réactive ou par évaporation réactive par canon à électrons activée par plasma.

**5.** Dispositif selon l'une des revendications 1 ou 2, dans lequel la couche barrière (2, 6, 8, 12) présente une structure granulaire.

**6.** Dispositif selon la revendication 5, dans lequel la couche barrière est formée par évaporation réactive par arcs ou par évaporation réactive par canon à électrons sans activation plasma.

**7.** Procédé d'assemblage d'un dispositif de stockage d'énergie comprenant une couche (3, 5, 9, 11) d'électrode et une couche (1, 7) de collecteur associé à la couche (3, 5, 9, 11) d'électrode, comprenant une étape (400) consistant à interposer entre la couche (3, 5, 9, 11) d'électrode et la couche (1, 7) de collecteur, une couche barrière (2, 6, 8, 12) formée en nitrure métallique $MeN_x$, dans laquelle $Me$ est un métal ou plusieurs métaux, la couche barrière (2, 6, 8, 12) étant apte à empêcher une diffusion d'ions contenus dans un électrolyte (13, 14, 16) jusqu'à la couche (1, 7) de collecteur, **caractérisé en ce que** la couche barrière (2, 6, 8, 12) présente une stoechiométrie $x$ comprise entre 0,85 et 1,05, une taille de grains comprise entre 10 et 30 nanomètres et une épaisseur comprise entre 0,15 et 0,30 micromètres.

**8.** Procédé selon la revendication 7, comprenant une étape (200) préalable consistant à sélectionner des paramètres de taille de grain, d'épaisseur et de stoechiométrie de la couche barrière (2, 6, 8, 12) en fonction d'une durée de vie recherchée du dispositif de stockage d'énergie,

**9.** Procédé selon l'une des revendications 7 ou 8, comprenant une étape (300) consistant à former la couche barrière (2, 6, 8, 12) par dépôt sur une surface de la couche (1, 7) de collecteur.

**10.** Procédé selon l'une des revendications 7 ou 8, comprenant une étampe (300) consistant à former la couche barrière (2, 6, 8, 12) par dépôt sur une surface de ta couche (3, 5, 9, 11) d'électrode.

**11.** Procédé selon l'une des revendications 7 à 10, comprenant une étape (100) préliminaire consistant à décaper une surface de la couche (1, 7) de collecteur destinée à être en contact avec la couche (2, 6, 8, 12) barrière.

**12.** Procédé selon l'une des revendications 7 à 11, comprenant une étape (300) consistant à former la couche barrière (2, 6, 8, 12) par pulvérisation magnétron réactive, par évaporation réactive par canon à électrons activée par plasma, par évaporation réactive par arcs ou par évaporation réactive par canon à électrons sans activation plasma.

**Claims**

**1.** A power storage device including an electrode layer (3, 5, 9, 11) and a collector layer (1, 7) associated with the electrode layer, also including a barrier layer (2, 6, 8, 12) formed from a metallic nitride $MeN_x$ wherein $Me$ is one or more metals, the barrier layer (2, 6, 8, 12) being inserted between the electrode layer (3, 5, 9, 11) and the collector layer (1, 7), the barrier layer (2, 6, 8, 12) being adapted to prevent diffusion of ions contained in an electrolyte (13, 14, 16) up to the collector layer (1, 7), **characterized in that** the barrier layer (2, 6, 8, 12) has a stoichiometry value $x$ comprised between 0.85 and 1.05, a grain size comprised between 10 and 30 nanometers and a thickness comprised between 0.15 and 0.30 micrometers.

**2.** The device according to claim 1, wherein the barrier layer (2, 6, 8, 12) is formed from titanium nitride (*TiN*), chromium nitride (*CrN*) or titanium nitride-aluminium (*TiAlN*).

**3.** The device according to one of claims 1 or 2, wherein the barrier layer (2, 6, 8, 12) exhibits a columnar structure.

**4.** The device according to claim 3, wherein the barrier layer (2, 6, 8, 12) is formed by reactive magnetron sputtering or by reactive evaporation by plasma-activated electron gun.

**5.** The device according to one of claims 1 or 2, wherein the barrier layer (2, 6, 8, 12) has a granular structure.

**6.** The device according to any of claim 5, wherein the barrier layer is formed by reactive arc evaporation or by reactive electron-gun evaporation without plasma activation.

7. A method for a power storage device assembly including an electrode layer (3, 5, 9, 11) and a collector layer (1, 7) associated with the electrode layer (3, 5, 9, 11), including a step (400) that consists of inserting, between the electrode layer (3, 5, 9, 11) and the collector layer (1, 7), a barrier layer (2, 6, 8, 12) formed from a metallic nitride $MeN_X$, wherein Me is a one metal or more metals, the barrier layer (2, 6, 8, 12) being adapted to prevent diffusion of ions contained in an electrolyte (13, 14, 16) up to the collector layer (1, 7), **characterized in that** the barrier layer (2, 6, 8, 12) has a stoichiometry value x comprised between 0.85 and 1.05, a grain size comprised between 10 and 30 nanometers and a thickness comprised between 0.15 and 0.30 micrometers.

8. The method according to claim 7, including a step (200) that consists of selecting grain-size, thickness and stoichiometry parameters of the barrier layer (2, 6, 8, 12) in accordance with a lifetime sought for the power storage device.

9. The method according to one of claims 7 or 8, including a step (300) that consists of forming the barrier layer (2, 6, 8, 12) by deposition onto a surface of the collector layer (1, 7).

10. The method according to one of claims 7 or 8, including a step (300) that consists of forming the barrier layer (2, 6, 8, 12) by deposition onto a surface of the electrode layer (3, 5, 9, 11).

11. The method according to one of claims 7 through 10, including a preliminary step (100) that consists of scouring a surface of the collector layer (1, 7) intended to be in contact with the barrier layer (2, 6, 8, 12).

12. The method according to one of claims 7 through 11, including a step (300) that consists of forming the barrier layer (2, 6, 8, 12) by reactive magnetron sputtering, by reactive evaporation by plasma-activated electron gun, by reactive arc evaporation or byreactive electron-gun evaporation without plasma activation.

**Patentansprüche**

1. Einrichtung zur Energiespeicherung, mit einer Elektrodenschicht (3,5,9,11) und einer der Elektrodenschicht zugeordneten Kollektorschicht (1,7), außerdem mit einer Barriereschicht (2,6,8,12), die aus einem Metallnitrid $MeN_x$ besteht, wobei Me für ein Metall oder mehrere Metalle steht, wobei die Barriereschicht (2,6,8,12) zwischen der Elektrodenschicht (3,5,9,11) und der Kollektorschicht (1,7) angeordnet ist, wobei die Barriereschicht (2,6,8,12) in der Lage ist, eine Diffusion von Ionen, die in einem Elektrolyt (13,14,16) enthalten sind, zu der Kollektorschicht (1,7) zu verhindern, **dadurch gekennzeichnet, dass** die Barriereschicht (2,6,8,12) eine Stöchiometrie x zwischen 0,85 und 1,05, eine Korngröße zwischen 10 und 30 Nanometer und eine Dicke zwischen 0,15 und 0,30 Mikrometer aufweist.

2. Einrichtung nach Anspruch 1, in welcher die Barriereschicht (2,6,8,12) aus Titannitrid (TiN), aus Chromnitrid (CrN) oder aus Titan-Aluminium-Nitrid (TiA1N) besteht.

3. Einrichtung nach einem der Ansprüche 1 oder 2, in welcher die Barriereschicht (2,6,8,12) eine säulenförmige Struktur aufweist.

4. Einrichtung nach Anspruch 3, in welcher die Barriereschicht (2,6,8,12) durch reaktives Magnetron-Sputtern oder durch plasmaaktiviertes reaktives Aufdampfen mittels Elektronenstrahl gebildet ist.

5. Einrichtung nach einem der Ansprüche 1 oder 2, in welcher die Barriereschicht (2,6,8,12) eine körnige Struktur aufweist.

6. Einrichtung nach Anspruch 5, in welcher die Barriereschicht durch reaktives Aufdampfen mittels Lichtbogen oder durch reaktives Aufdampfen mittels Elektronenstrahl ohne Plasmaaktivierung gebildet ist.

7. Verfahren zum Zusammenfügen einer Energiespeichereinrichtung, die eine Elektrodenschicht (3,5,9,11) und eine der Elektrodenschicht (3,5,9,11) zugeordnete Kollektorschicht (1,7) aufweist, mit einem Schritt (400), der darin besteht, zwischen der Elektrodenschicht (3,5,9,11) und der Kollektorschicht (1,7) eine Barriereschicht (2,6,8,12) anzuordnen, die aus einem Metallnitrid $MeN_x$ besteht, wobei Me für ein Metall oder mehrere Metalle steht, wobei die Barriereschicht (2,6,8,12) in der Lage ist, eine Diffusion von Ionen, die in einem Elektrolyt (13,14,16) enthalten sind, zu der Kollektorschicht (1,7) zu verhindern, **dadurch gekennzeichnet, dass** die Barriereschicht (2,6,8,12) eine Stöchiometrie x zwischen 0,85 und 1,05, eine Korngröße zwischen 10 und 30 Nanometer und eine Dicke zwischen 0,15 und 0,30 Mikrometer aufweist.

8. Verfahren nach Anspruch 7, mit einem vorausgehenden Schritt (200), der darin besteht, die Parameter für die Korngröße, für die Dicke und für die Stöchiometrie der Barriereschicht (2,6,8,12) als Funktion einer angestrebten Lebensdauer der Energiespeichereinrichtung zu wählen.

9. Verfahren nach einem der Ansprüche 7 oder 8, mit einem Schritt (300), der darin besteht, die Barriereschicht (2,6,8,12) durch Abscheidung auf einer Oberfläche der Kollektorschicht (1,7) zu bilden.

10. Verfahren nach einem der Ansprüche 7 oder 8, mit einem Schritt (300), der darin besteht, die Barriereschicht (2,6,8,12) durch Abscheidung auf einer Oberfläche der Elektrodenschicht (3, 5, 9, 11) zu bilden.

11. Verfahren nach einem der Ansprüche 7 bis 10, mit einem vorbereitenden Schritt (100), der darin besteht, eine Oberfläche der Kollektorschicht (1,7), die mit der Barriereschicht (2,6,8,12) in Kontakt kommen soll, anzuätzen.

12. Verfahren nach einem der Ansprüche 7 bis 11, mit einem Schritt (300), der darin besteht, die Barriereschicht (2,6,8,12) durch reaktives Magnetron-Sputtern, plasmaaktiviertes reaktives Aufdampfen mittels Elektronenstrahl, reaktives Aufdampfen mittels Lichtbogen oder reaktives Aufdampfen mittels Elektronenstrahl ohne Plasmaaktivierung zu bilden.

FIG_1

FIG_2

FIG_3

FIG_4

**Ligne de base**

FIG.5

Taille des grains = 40 ± 5 nm
Durée de vie > 500

FIG.6

**Taille des grains = 40 ± 5 nm**
**Durée de vie > 1000**

FIG_7

**Taille des grains = 40 ± 5 nm**
**Durée de vie > 2000**

FIG_8

Taille des grains = 30 ± 5 nm
Durée de vie > 500

FIG_9

Taille des grains = 30 ± 5 nm
Durée de vie > 1000

FIG_10

Taille des grains = 30 ± 5 nm
Durée de vie > 2000

FIG_11

Taille des grains = 20 ± 5 nm
Durée de vie > 500

FIG_12

Taille des grains = 20 ± 5 nm
Durée de vie > 1000

FIG.13

Taille des grains = 20 ± 5 nm
Durée de vie > 2000

FIG.14

FIG_15

FIG_16

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4464706 A
- US 20040264110 A
- US 6565701 B
- WO 03094183 A